# EUROPÄISCHE PATENTANMELDUNG

(11) **EP 2 006 516 A1**
(43) Veröffentlichungstag der Anmeldung: **24.12.2008**
(21) Anmeldenummer: 07110906.0
(22) Anmeldetag: 22.06.2007
(51) Int. Cl.: F02D 41/00, F02B 37/10, F02B 39/10, F02B 37/22, F01N 3/20

(54) **Abgasturbolader**

(71) Anmelder: ABB Turbo Systems AG, 5400 Baden (CH)
(72) Erfinder: Neuenschwander, Peter, , CH-8006 Zürich (CH); Mutter, Alexander, , D-79733 Görwihl (DE); Fussstetter, Klaus, , CH-5408 Ennetbaden (CH); Codan, Ennio, , CH-5212 Hausen bei Brugg (CH); Brand, Daniel, , CH-5200 Brugg (CH)
(74) Vertreter: ABB Patent Attorneys

(57) **Zusammenfassung**

Wird ein Turbolader bestehend aus Verdichter und Turbine mit einem Motor/Generator kombiniert und gleichzeitig mit einstellbaren Leitschaufeln ausgerüstet, können der Druck im Luftreceiver (p_{Rec}) und die Spülung des Motors (Δp_{eng}) in gewissen Grenzen alleine mit dem Turbolader unabhängig voneinander gesteuert werden.

Es gibt 3 Grössen, die einen gewünschten Zustand einnehmen sollen: Druck im Luftreceiver (p_{Rec}), Spüldruckgefälle (Δp_{eng}) und elektrische Leistung (Pₑₗ). Es gibt zwei Stellgrössen: Pₑₗ und Stellung der verstellbaren Turbinen-Leitvorrichtung. Zwei der Grössen (p_{Rec}, Δp_{eng}, Pₑₗ) können unabhängig voneinander gewählt werden, die dritte Grösse ergibt sich.

## Beschreibung

### Technisches Gebiet

Die Erfindung bezieht sich auf das Gebiet der mittels Abgasturboladern aufgeladenen Brennkraftmaschinen. Sie betrifft ein Aufladesystem für eine Brennkraftmaschine mit mindestens einem Abgasturbolader sowie eine Regelung eines solchen Aufladesystems.

### Stand der Technik

Die Brennkammern von Brennkraftmaschinen (Verbrennungsmotoren), welche im 2-oder 4-Taktverfahren betrieben werden, müssen nach dem Verbrennungsvorgang gespült werden. Dabei wird auf unterschiedliche Art und Weise das Abgas aus den Brennkammern geleitet. Wird diese Spülung der Brennkammern einer Brennkraftmaschine in Abhängigkeit von z. B. Betriebs-, Umwelt- und Brennstoffparametern gesteuert, um z. B. die Ventiltemperaturen auch bei Teillast tief zu halten, geschieht dies in der Regel auf zwei Arten, entweder durch das Verstellen der Auslassventile und oder falls vorhanden der Einlassventile an den Brennkammern oder durch das Variieren des Abgas- und/ oder Luftstroms, indem die Leitschaufeln der Abgasturbine verstellt oder Luft- und/oder Abgas-Wastegate betätigt werden. Werden die Strömungen zu oder von der Brennkraftmaschine in ihrer Menge variiert respektive gestaut, hat dies natürlich eine entsprechende Druckänderung im Luftreceiver zur Folge, sofern nicht gleichzeitig die Steuerzeiten der Ventile angepasst werden.

Luftreceiverdruck und Spüldruckgefälle ergeben sich aus dem Motorbetrieb, den Motoreigenschaften und den Turboladereigenschaften, der Alterung/Verschmutzung der Komponenten sowie den Umgebungsbedingungen. Die Auslegung der Komponenten wird in der Designphase des Motors und des Aufladesystems gemacht. Im Betrieb sind der Luftreceiverdruck und das Spüldruckgefälle nur noch vom Motorbetrieb, vom Brennstoff, von der Alterung/Verschmutzung der Komponenten und von den Umgebungsbedingungen abhängig und - sofern sie verstellbar sind - von den Steuerzeiten und Hubkurven der Ein- und Auslassventile, respektive von der Form und Position der Ein- und Auslassschlitze

Werden, beispielsweise aus Kostengründen oder weil sie einen kleineren Hilfsenergieverbrauch (als zum Beispiel Hydrauliksysteme) aufweisen, Brennkraftmaschinen mit fixen Hubkurven und -Steuerzeiten der Auslassventile und falls vorhanden Einlassventile eingesetzt, kann mit herkömmlichen Aufladesystemen der Druck im Luftreceiver nicht in gewünschtem Masse unabhängig von der Spülung eingestellt werden. Unter anderem aufgrund strikter werdender Emissionsgesetze kann dies jedoch zukünftig nötig werden.

### Kurze Darstellung der Erfindung

Wird ein Turbolader bestehend aus Verdichter und Turbine mit einem Motor/Generator kombiniert und gleichzeitig mit einstellbaren Leitschaufeln ausgerüstet, können der Druck im Luftreceiver und die Spülung des Motors in gewissen Grenzen alleine mit dem Turbolader unabhängig voneinander gesteuert werden.

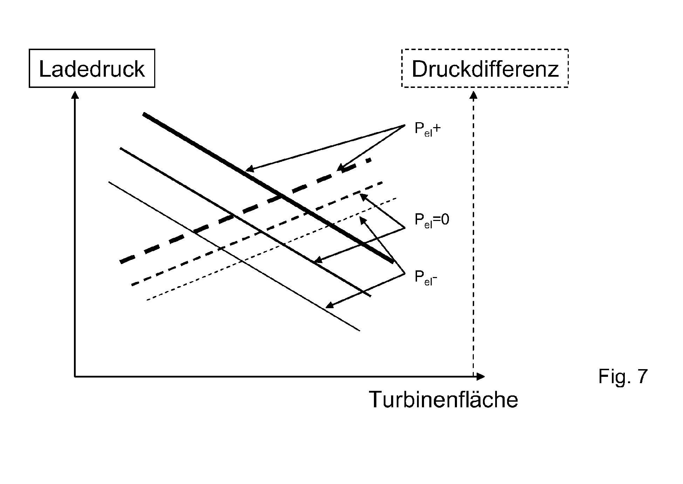

Es gibt 3 Grössen, die einen gewünschten Zustand einnehmen sollen: Druck im Luftreceiver (p_{Rec}), Spüldruckgefälle (Δp_{eng}) und elektrische Leistung (Pₑₗ). Es gibt zwei Stellgrössen: Das Signal für die Stellung der elektrischen Leistung (u_{Pel}) und für die Stellung der verstellbaren Turbinen-Leitvorrichtung (u_{VTG}). Zwei der Grössen (p_{Rec}, Δp_{eng}, Pₑₗ) können unabhängig voneinander gewählt werden, die dritte Grösse ergibt sich (siehe Fig. 7). Stehen bei Motoren mit variablen Ventilsteuerzeiten die Ventilsteuerzeiten auch noch als Stellgrösse zur Verfügung, dann können alle drei Grössen (p_{Rec}, Δp_{eng}, Pₑₗ) unabhängig voneinander gewählt werden.

Die erfindungsgemässe Steuerung oder Regelung erlaubt es, die Leistung der elektrischen Maschine und die Stellung der verstellbaren Turbinen-Leitgeometrie derart einzustellen, dass sich ein gewünschtes Spüldruckgefälle und ein gewünschter Luftreceiverdruck einstellt, wobei dies optional auch ohne Änderung der Ventilsteuerzeiten und Ventilhubkurven erfolgen können soll. Werden bei einem Motor, bei dem die Abgasturbolader mit verstellbarer Turbinen-Leitgeometrie und einem Antrieb/Abtrieb für PTI/PTO ausgerüstet sind, die Ventilparameter geändert, lässt sich in begrenztem Masse die elektrische Leistung an der elektrischen Maschine unabhängig von Ladedruck und Spülgefälle einstellen.

Sofern das Spülgefälle, das heisst die Druckdifferenz der Strömungen am Einrespektive Austritt der Brennkammer(n) nicht konstant gehalten werden muss, kann durch die Steuerung der Turbinenleitschaufeln mehr oder weniger elektrische Leistung erzeugt und die Produktion einem schwankenden Bedarf angepasst werden. Diese Möglichkeit besteht vor allem bei 4-Taktmotoren, da diese auf Änderungen des Spülgefälles weniger empfindlich reagieren als 2-Taktmotoren.

Gerade bei Brennkraftmaschinen mit Katalysatoren können Steuermöglichkeiten des Turboladers im transienten Betrieb speziell nützlich sein, da sich wegen der grossen thermische Trägheit des Katalysators ungünstige oder unzulässige Betriebszustände einstellen können, z. B. Pumpen des Verdichters des Turboladers oder es werden Oszillationen des Druckes im Luft- und Abgasreceiver provoziert.

### Kurze Beschreibung der Zeichnungen

Nachfolgend wird die Erfindung anhand einer Zeichnung detailliert erläutert. Hierbei zeigt
- Fig. 1: ein Signalflussbild eines Aufladesystems mit einem Abgasturbolader, welcher mit einer elektrischen Maschine verbunden und mit einer verstellbaren Turbinenleitgeometrie ausgestattet ist,
- Fig. 2: eine Regelung mit zwei Reglern zum Regeln von Spüldruckgefälle und Luftreceiverdruck,
- Fig. 3: die Regelung nach Fig. 2 mit vertauschten Reglern,
- Fig. 4: die Regelung nach Fig. 2 mit einem MIMO-Regler,
- Fig. 5: die Regelung nach Fig. 4, wobei zusätzlich die Leistung der elektrischen Maschine geregelt wird,
- Fig. 6: die Regelung nach Fig. 5, wobei zusätzlich eine Temperatur im Abgasbereich geregelt wird, und
- Fig. 7: ein Diagramm mit Luftreceiverdruck und Spüldruckgefälle in Abhängigkeit der elektrischen Leistung und der Stellung der Turbinen-Leitgeometrie.

### Weg zur Ausführung der Erfindung

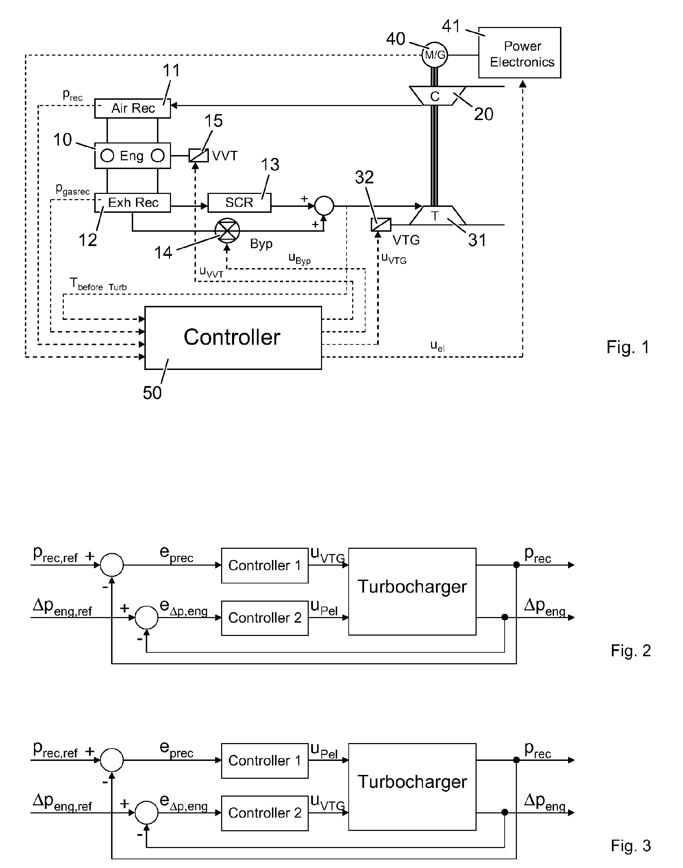

Fig. 1 zeigt ein Signalflussbild eines Aufladesystems für eine Brennkraftmaschine 10 mit einem Abgasturbolader. Die Brennkraftmaschine umfasst Brennkammern, welche eintrittsseitig mit einem Luftreceiver 11 und austrittsseitig mit einem Abgasreceiver 12 verbunden sind. Optional umfasst die Brennkraftmaschine eine Steuereinheit 15 zur Variierung der Ventilöffnungszeiten. Der Abgasturbolader umfasst einen Verdichter 20 sowie eine Abgasturbine 31. Der Abgasturbolader ist mit einer elektrischen Maschine 40 (Motor/Generator) - oder allgemeiner mit einem Antrieb/Abtrieb - verbunden und mit einer Abgasturbine mit verstellbarer Leitgeometrie 32 ausgestattet. Die elektrische Maschine ist mit einer Leistungselektronikeinheit 41 verbunden, welche je nach Betriebsart der elektrischen Maschine Leistung in den Turbolader ein- oder auskoppelt.

Die Verbindung zwischen dem Abgasturbolader und der elektrischen Maschine kann mittels einer schaltbaren Kupplung oder einer nicht schaltbaren Kupplung realisiert sein. Zwischen der elektrischen Maschine und dem Abgasturbolader kann sich optional ein Getriebe befinden. Die elektrische Maschine kann verdichterseitig oder turbinenseitig angeordnet oder in den Abgasturbolader integriert sein, beispielsweise in den Filterschalldämpfer oder zwischen den Lagern. Die elektrische Maschine kann mit der gleichen Lagerart wie der Abgasturbolader oder mit anderen Lagern ausgerüstet sein (Magnet-, Wälz-, Gleitlager). Die Schmierung oder gegebenenfalls auch die Kühlung kann mit dem gleichen Öl wie beim Abgasturbolader erfolgen. Gegebenfalls kann die Kühlung auch mit Luft oder Wasser erfolgen, wobei im Falle der Luft spezielle Ventilatoren und oder Elektromotoren vorgesehen sein können und oder die von der elektrischen Maschine erwärmte Luft kann vom Verdichter angesaugt werden oder zur Kühlung kann Luft aus dem Luftreceiver verwendet werden.

Die Steuerung/Regelung der elektrischen Maschine kann mit der Steuerung/Regelung der verstellbaren Leitgeometrie der Abgasturbine eine Einheit bilden und/oder in die Steuerung/Regelung der Brennkraftmaschine einbezogen werden.

In einer ersten Ausführungsform werden die elektrische Maschine und die verstellbare Turbinen-Leitgeometrie aufgrund von vorgegebenen Daten gesteuert. Zu jedem Betriebspunkt der Brennkraftmaschine (definiert durch Drehzahl und Drehmoment, allenfalls auch weitere Parameter wie beispielsweise Umgebungstemperatur der Luft, Betriebszustand eines Katalysators) wird ein n-Dimensionales Kennfeld hinterlegt, das Werte für das Signal für die elektrische Leistung des Motor/Generators und die Stellung der Turbinen-Leitgeometrie als Funktion des Ladedruckes und des Spüldruckgefälles nennt. Die Steuerung liest aus dem zum aktuellen Betriebspunkt der Brennkraftmaschine gehörenden Kennfeld die Signale für die elektrische Leistung und die Stellung der Turbinen-Leitgeometrie aus und schickt sie an die zugehörigen Aktuatoren. Alternativ zum Kennfeld, können auch mathematische Modelle (Blackbox, physikalisch, empirisch) zur Signalgenerierung verwendet werden.

In einer zweiten Ausführungsform, deren Signalflussdiagram in Fig. 2 dargestellt ist, werden die elektrische Maschine und die verstellbare Turbinen-Leitgeometrie aufgrund von gemessenen oder Berechneten Daten geregelt. Als Messung oder als Resultat eines mathematischen Modells liegen das Spüldruckgefälle Δp_{eng} sowie der Druck im Luftreceiver p_{rec} vor. Ebenfalls vorhanden sind die gewünschten Werte für das Spüldruckgefälle Δp_{eng,ref} und für den Druck im Luftreceiver p_{rec,ref}.

Ein erster Regler (Controller 1) regelt den Luftreceiverdruck p_{rec} so, dass sich der gewünschte Luftreceiverdruck p_{rec,ref} einstellt, indem er ein geeignetes Signal u_{VTG} an den Aktuator der verstellbaren Turbinen-Leitgeometrie sendet. Ein zweiter Regler regelt das Spüldruckgefälle Δp_{eng} so, dass sich das gewünschte Spüldruckgefälle Δp_{eng,ref} einstellt, indem er ein geeignetes Signal u_{Pel} an die Leistungselektronik zur Regelung der elektrischen Leistung sendet.

Die beiden Regler können ihre Rollen auch vertauschen, wie dies im Signalflussdiagramm nach Fig. 3 dargestellt ist. Der erste Regler stellt den gewünschten Luftreceiverdruck p_{rec,ref} ein, indem er ein geeignetes Signal u_{Pel} an die Leistungselektronik zur Regelung der elektrischen Leistung sendet. Der zweite Regler stellt das gewünschte Spüldruckgefälle Δp_{eng,ref} ein, indem er ein geeignetes Signal u_{VTG} an den Aktuator der verstellbaren Turbinen-Leitgeometrie sendet.

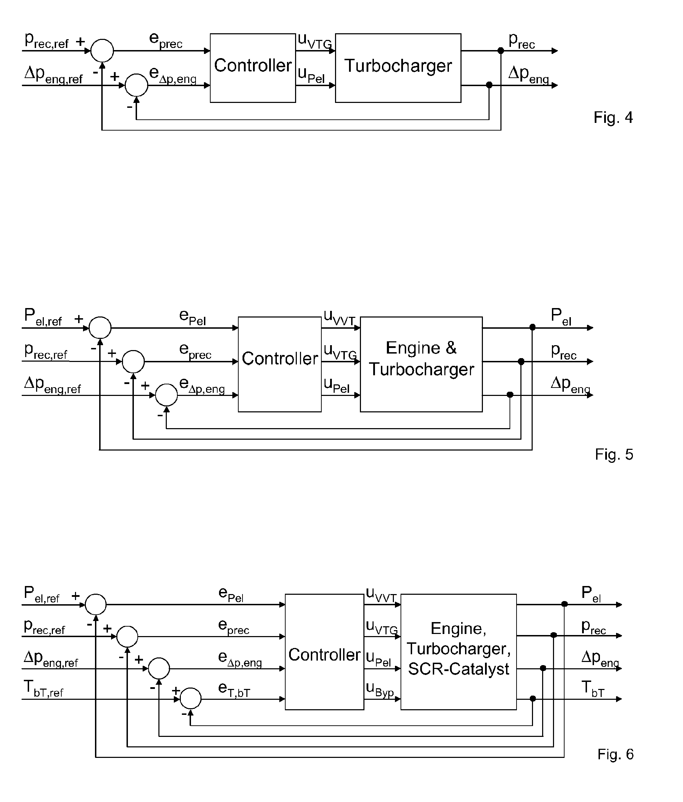

Die beiden Regler können auch zu einem einzigen, sogenannten MIMO Regler (multiple input, multiple output Regler) kombiniert werden, wie dies in Fig. 4 angedeutet ist. Querkopplungen können so besser berücksichtigt werden.

Besitzt die Brennkraftmaschine eine variable Ventilsteuerung (VVT), so kann, wie in Fig. 5 dargestellt, zusätzlich die elektrische Leistung Pₑₗ geregelt werden, indem ein dritter Regler die Ventilsteuerzeiten geeignet einstellt. Eine solche kombinierte Regelung wird mit Vorteil als MIMO-Regler ausgeführt. Auf der Eingangsseite des MIMO-Reglers liegen folgende Signale an:
- Differenz zwischen elektrischer Soll-Leistung P_{el,ref} und Ist-Leistung Pₑₗ,
- Differenz zwischen Soll-Spüldruckgefälle Δp_{eng,ref} und Ist-Spüldruckgefälle Δp_{eng},
- Differenz zwischen Soll-Ladedruck p_{rec,ref} und Ist-Ladedruck p_{rec}.

Am Ausgang des MIMO Reglers werden folgende Signale ausgegeben:
- u_{Pel} an Leistungselektronik zur Regelung der elektrischen Leistung,
- u_{VTG} an den Aktuator der verstellbaren Turbinen-Leitgeometrie zur Einstellung der Position der Leitelemente,
- u_{VVT} an den Aktuator für die Einstellung der Ventilsteuerzeiten.

Umfasst die Brennkraftmaschine einen (SCR-)Katalysator, kann die erfindungsgemässe Regelung weiter ergänzt werden. Geeignete Rückführgrössen um einen nachgeschalteten (SCR-)Katalysator durch Betätigung eines Bypass-Ventils, welches je nach Einstellung mehr oder weniger Abgas am (SCR-) Katalysator vorbeiführen lässt, im geeigneten Betriebsbereich betreiben zu können, sind etwa die Temperatur nach der Abgasturbine, die Temperatur am Ausgang der Brennkraftmaschine, die Temperatur in/nach dem Katalysator, der Druck vor oder nach der Abgasturbine, der Druck und die Temperatur im Luftreceiver oder aber eine Kombination dieser Messgrössen. Weiter können Brennstoffkenngrössen unter Umständen auch manuell in die Regelung eingegeben werden.

Bei 2-stufiger Aufladung kann die Hochdruckstufe mit einer elektrischen Maschine und einer verstellbaren Turbinen-Leitgeometrie ausgerüstet sein. In diesem Fall beziehen sich alle beschriebenen Steuerungs- und Regelungsverfahren auf die Hochdruckstufe.

Wird ein Motor mit mehreren parallel arbeitenden Turboladern ausgerüstet, können folgende Typen von Turboladern zum Einsatz kommen: (A) Turbolader mit elektrischer Maschine und verstellbarer Turbinen-Leitgeometrie, (B) Turbolader nur mit elektrischer Maschine und (C) Turbolader nur mit verstellbarer Turbinen-Leitgeometrie. Die Turboladertypen können auch gemischt werden. Es lässt sich dann wie oben beschrieben der Ladedruck und das Spüldruckgefälle regeln. Wird zusätzlich noch an jedem Verdichter der Volumenstrom oder eine dafür repräsentative Grösse gemessen, können die Betriebspunkte der Turbolader im Verdichterkennfeld einander angeglichen werden, indem mit Turbolader-individuell berechneten Turbinen-Leitgeometrie-Stellungen der Turbinenmassenstrom so eingestellt wird, dass das Moment der elektrischen Maschinen kompensiert wird.

Die erfindungsgemässe Regelung erlaubt die Steuerung des Drucks im Luftreceivers und die Spülung von Motoren mit fixen Ventilsteuerzeiten zwecks Emissionsminderung und Brennstoffverbrauchsoptimierung und Reduktion der thermischen Belastung der Verbrennungsmotor und Turboladerbauteile mit oder ohne Abgaskatalysator sowie ein verbessertes transientes Betriebsverhalten.

Dank der elektrischen Maschine kann das System Brennkraftmaschine-Abgasturbolader effizienter genutzt und somit der Verbrauch von Brennstoff reduziert werden. Insbesondere im mittleren bis hohen Lastbereich der Brennkraftmaschine, also etwa ab 40% der Maximallast, kann über die elektrische Maschine Leistung abgeführt werden (power take out - PTO).

Dank der erfindungsgemässen Steuerung der Brennkraftmaschine können bei 2-Taktmotoren Hilfsgebläse ganz weggelassen werden oder durch kleinere Hilfsgebläse für den tieferen Lastbereich, etwa bis 20% der Maximallast, ersetzt werden. Bei 4-Taktmotoren ermöglicht der elektrische Antrieb eine Teillasthilfe.

Im konstanten Betrieb kann die ausgekoppelte elektrische Leistung an den momentan benötigten Verbrauch angepasst werden, indem die Stellung der Leitschaufeln der Abgasturbineturbine variiert wird.

Die erfindungsgemässe Steuerung findet bei einstufiger oder mehrstufiger Aufladung, für 2-Takt- oder 4-Taktmotoren Anwendung. Der Brennstoff kann flüssig und oder gasförmig oder allenfalls auch fest sein (Kohle-Partikel).

Zur unabhängigen Steuerung der Spülung und des Ladedruckes lässt sich das Aufladesystem mit einer beliebigen Anzahl Turbolader mit elektrischer Maschine betreiben, wobei mindestens einer mit VTG ausgerüstet sein muss. Sind nicht alle Turbolader mit elektrischer Maschine ausgestattet, lassen sich die erwähnten Parameter Spülung und Ladedruck nur in einem sehr begrenzten Bereich unabhängig voneinander Einstellen, sofern nicht zusätzliche Stelleinrichtungen wie z. B. Verdichter mit Verstelldiffusor eingesetzt werden.

Anstelle der beschriebenen elektrischen Maschine (Motor/ Generator) können auch hydraulische, pneumatische oder mechanische Antriebe/Abtriebe vorgesehen sein.

### Bezugszeichenliste

- 10: Brennkraftmaschine
- 11: Luftreceiver
- 12: Abgasreceiver
- 13: SCR Katalysator
- 14: Bypass-Ventil
- 15: Variable Ventilsteuerung (VVT)
- 20: Verdichter
- 31: Turbine
- 32: Verstellbarer Turbinen-Leitgeometrie (VTG)
- 40: Antrieb/Abtrieb (elektrische Maschine, Motor/Generator)
- 41: Leistungselektronik
- 50: Steuerungseinhdeit

## Patentansprüche

1. Verfahren zum Betreiben einer mittels eines Abgasturboladers aufgeladenen Brennkraftmaschine (10), bei welchem Verfahren der Druck in einem Luftreceiver (11) zwischen dem Verdichter (20) des Abgasturboladers und den Brennkammern der Brennkraftmaschine (11) und das Spüldruckgefälle in den Brennkammern der Brennkraftmaschine (10) über eine mit der Welle des Abgasturboladers gekoppelte elektrische Maschine (M) und über eine verstellbare Leitgeometrie (32) der Turbine (31) des Abgasturboladers gesteuert oder geregelt wird.

2. Verfahren nach Anspruch 1 zum Steuern und Regeln des Luftreceiverdruckes, des Spüldruckgefälles an einer Brennkraftmaschine und der elektrischen Leistung der an den Abgasturbolader gekuppelten elektrischen Maschine, indem die Leistung der elektrischen Maschine, die Stellung der verstellbaren Leitgeometrie der Turbine und die Ventilsteuerzeiten geeignet eingestellt werden.

3. Verfahren nach Anspruch 1 zum Steuern und Regeln des Luftreceiverdruckes und des Spüldruckgefälles an einer 2-stufig aufgeladenen Brennkraftmaschine, wobei die Leistung der an den Abgasturbolader der Hochdruckstufe gekuppelten elektrischen Maschine und die Stellung der verstellbaren Leitgeometrie der Turbine an der Hochdruckstufe geeignet eingestellt werden.

4. Verfahren nach Anspruch 1 zum Steuern und Regeln der Temperatur nach Turbolader respektive Temperatur nach Verbrennungsmotor, um einem nachgeschalteten (SCR-) Katalysator im geeigneten Betriebsbereich betreiben zu können, wobei ein Bypass-Ventil geeignet eingestellt wird, so dass mehr oder weniger Abgas an dem (SCR-) Katalysator vorbeigeführt wird.

5. Verfahren nach Anspruch 4, wobei als Rückführgrössen für die Regelung die Temperatur im oder dem nach Katalysator, der Druck vor oder nach Turbine oder eine Kombination dieser Messgrössen verwendet werden.

6. Aufladesystem für eine Brennkraftmaschine (10), umfassend mindestens einen Abgasturbolader mit einer Turbine (32) mit einer verstellbaren Leitgeometrie (31), **dadurch gekennzeichnet, dass** der Abgasturbolader mit einer elektrischen Maschine (M) gekuppelt ist.
